# EUROPÄISCHE PATENTSCHRIFT

(11) **EP 3 664 972 B1**
(45) Veröffentlichungstag und Bekanntmachung des Hinweises auf die Patenterteilung: **05.01.2022**
(21) Anmeldenummer: 18746900.2
(22) Anmeldetag: 25.07.2018
(51) Int. Cl.: B23D 59/00, B25F 5/02, B23D 49/16

(54) **HAND-WERKZEUGMASCHINE MIT EINEM ABSAUGANSCHLUSS**
HAND-HELD MACHINE TOOL COMPRISING A SUCTION CONNECTION
MACHINE-OUTIL PORTATIVE DOTÉE D'UN RACCORD D'ASPIRATION

(30) Priorität: 11.08.2017 DE 202017006718 U; 08.02.2018 DE 102018102855
(43) Veröffentlichungstag der Anmeldung: 17.06.2020
(73) Patentinhaber: Festool GmbH, 73240 Wendlingen (DE)
(72) Erfinder: ZVÁNOVEC, Václav, 47124 Mimon (CZ)
(74) Vertreter: Patentanwälte Bregenzer und Reule Partnerschaftsgesellschaft mbB
(86) Internationale Anmeldenummer: PCT/EP2018/070211
(87) Internationale Veröffentlichungsnummer: WO 2019/029998

(56) Entgegenhaltungen:
- EP-A1- 2 564 964
- DE-A1- 4 316 155
- DE-A1-102006 000 200
- DE-A1-102008 042 848
- DE-A1-102015 225 375
- DE-U1-202014 003 489

## Beschreibung

Die Erfindung betrifft eine handgeführte Hand-Werkzeugmaschine zur Herstellung eines Trennschnittes in ein Werkstück entlang einer Arbeitsrichtung anhand eines Schneidwerkzeugs, gemäß dem Oberbegriff des Anspruchs 1.

Eine derartige Hand-Werkzeugmaschine geht beispielsweise aus DE 10 2006 000 200 A1 oder EP 2564 964 A1 hervor.

Bei einer typischen Oszillations-Hand-Werkzeugmaschine, beispielsweise einer Stichsäge wie in DE 10 2008 009 887 A1 erläutert, ist ein Absauganschluss vorhanden, um beim Herstellen des Trennschnittes anfallende Späne, Stäube und dergleichen effektiv abzusaugen. Der Absaugkanal verläuft unterhalb eines nach hinten, entgegen der Arbeitsrichtung orientierten, Handgriffabschnittes, so dass er beim Betrieb bzw. beim Herstellen des Trennschnittes nicht stört.

Allerdings ist der Betrieb der Hand-Werkzeugmaschine darauf konzentriert, dass der typische, pistolengriffartig nach hinten abstehende Griffabschnitt vom Bediener ergriffen und die Säge in Arbeitsrichtung nach vorn am Werkstück entlang geführt wird. Diese Handhabung mag zwar für eine Vielzahl von Anwendungsfällen günstig sein, schränkt jedoch die Handhabbarkeit der Hand-Werkzeugmaschine deutlich ein.

Es ist daher die Aufgabe der vorliegenden Erfindung, eine verbesserte Hand-Werkzeugmaschine bereit zu stellen.

Zur Lösung der Aufgabe ist eine Hand-Werkzeugmaschine gemäß der technischen Lehre des Anspruchs 1 vorgesehen.

Es ist ein Grundgedanke der vorliegenden Erfindung, dass der Absauganschluss in einem vorderen Bereich des Maschinengehäuses, also am Antriebsabschnitt, angeordnet ist. Der Antriebsabschnitt nimmt beispielsweise die Werkzeugaufnahme auf oder die Werkzeugaufnahme ist an dem Antriebsabschnitt angeordnet. An dem Antriebsabschnitt oder in dem Antriebsabschnitt können aber auch weitere Komponenten des Antriebs der Hand-Werkzeugmaschine vorgesehen sein, beispielsweise ein Getriebe und/oder der Antriebsmotor.

Die Hand-Werkzeugmaschine ist also beispielsweise eine Hubsäge oder Hub-Schneidemaschine, eine Oszillationssäge, eine Oszillationsschneidemaschine oder dergleichen.

Der Antrieb kann ein drehoszillierender Antrieb und/oder ein huboszillierender Antrieb sein. Insbesondere ist es möglich, dass das Schneidwerkzeug entlang der Antriebsachse durch den Antrieb linear hin und her, also im Sinne einer Linearbewegung, angetrieben wird. Es ist aber auch eine überlagerte Linear-Dreh-Bewegung möglich, eine Pendelhubbewegung oder dergleichen.

Die Antriebsbewegung erfolgt also zwischen Umkehrpunkten, beispielsweise linearen Antriebsumkehrpunkten und/oder Schwenkantriebsumkehrpunkten.

Der Absauganschluss umfasst beispielsweise einen Anschlussstutzen, ein Anschlussrohr oder dergleichen. An dem Absauganschluss können Formschlusskonturen zum formschlüssigen Halt beispielsweise eines Absaugschlauches vorgesehen sein.

Bevorzugt ist es, wenn der Absauganschluss in Arbeitsrichtung vor der Werkzeugaufnahme an dem Maschinengehäuse angeordnet ist. Hinter der Werkzeugaufnahme kann beispielsweise ein Griffabschnitt oder Handgriff angeordnet sein. An sich stört zwar der Absauganschluss, wenn er in Arbeitsrichtung vor dem Maschinengehäuse angeordnet ist und die Hand-Werkzeugmaschine an einem Handgriff, der vom Antriebsabschnitt in Arbeitsrichtung nach hinten absteht, ergriffen wird. Es ist aber möglich, dass die Hand-Werkzeugmaschine bei dem erfindungsgemäß angeordneten Absauganschluss vom Bediener anders, insbesondere an anderer Stelle des Maschinengehäuses, ergriffen wird, wenn er beispielsweise einen Schnitt von oben nach unten in das Werkstück, beispielsweise eine Wand, einbringt.

Die Hand-Werkzeugmaschine kann beispielsweise eine Stichsäge, Säbelsäge oder dergleichen sein. Bei der Hand-Werkzeugmaschine kann es sich vorzugsweise um eine Dämmstoffsäge handeln.

Das Schneidwerkzeug kann ein Sägeblatt, ein Messer oder dergleichen umfassen.

Die Schneidkontur kann beispielsweise klingenartig oder messerartig sein. Die Schneidkontur kann einen Wellenschliff und/oder Sägezähne und/oder Messerzähne oder dergleichen aufweisen.

Das Schneidwerkzeug kann an einer Werkzeugführung, beispielsweise einem Stützteil oder dergleichen, geführt sein. Die Führung steht zweckmäßigerweise ebenfalls von dem Maschinengehäuse ab. Die Führung kann einen Bestandteil des Schneidwerkzeugs bilden.

Das Schneidwerkzeug kann ein Stützteil aufweisen, welches am Maschinengehäuse fest angeordnet oder lösbar fixierbar ist, wobei der Schneidwerkzeug oder ein Schneidkörper des Schneidwerkzeugs an dem Stützteil abgestützt, insbesondere geführt, ist.

Die Antriebsachse ist vorzugsweise etwa rechtwinkelig zu der Bodenseite oder Bodenwand des Maschinengehäuses. Bevorzugt ist es, wenn sich das Schneidwerkzeug entlang seiner Haupterstreckungsachse oder Haupterstreckungsrichtung von der Bodenseite des Maschinengehäuses weg erstreckt.

Beispielsweise kann das Schneidwerkzeug säbelartig oder klingenartig sein. Vorzugsweise hat das Schneidwerkzeug eine Längsgestalt. Eine Längserstreckung des Schneidwerkzeugs verläuft vorzugsweise parallel oder koaxial zur Antriebsachse. Die Längserstreckung ist länger als die Quererstreckung des Schneidwerkzeugs. Die Schneidkontur des Schneidwerkzeugs verläuft bei dieser Konfiguration vorzugsweise winkelig, insbesondere etwa rechtwinkelig, zur Bodenseite des Maschinengehäuses und/oder zur Antriebsachse oder ist entsprechend orientiert.

Es ist aber auch möglich, dass das Schneidwerkzeug einen Schneidabschnitt aufweist, der zur Antriebsachse winkelig, beispielsweise rechtwinkelig ist. Dies ist insbesondere dann vorteilhaft, wenn der Antrieb ein dreh-oszillierender Antrieb ist. Die Schneidkontur des Schneidwerkzeugs kann bei dieser Ausprägung vorzugsweise etwa parallel oder parallel zur Bodenseite oder Bodenwand des Maschinengehäuses und/oder zur Antriebsachse verlaufen oder orientiert sein.

Vorzugsweise ist vorgesehen, dass der Absauganschluss innerhalb eines Winkelbereiches des Maschinengehäuses angeordnet ist, der sich von der Bodenseite des Maschinengehäuses in Richtung der Antriebsachse über maximal 120°, vorzugsweise auch weniger, beispielsweise 100°, 90° oder 80°, erstreckt. Es ist auch möglich, dass der Winkelbereich sich von der Bodenseite des Maschinengehäuses in Richtung bis zur Antriebsachse erstreckt. Der Absauganschluss ist also sozusagen in einem vorderen Winkelsegment des Maschinengehäuses bezüglich der Arbeitsrichtung angeordnet.

Weiterhin vorteilhaft ist es, wenn eine Längsachse eines durch den Absauganschluss verlaufenden Strömungskanals in einem Winkel von mindestens 30°, vorzugsweise mindestens 40° oder 50° oder in manchen Fällen mindestens 60° zu einer Haupterstreckungsachse der Bodenseite des Maschinengehäuses verläuft. Mithin ist also der Absauganschluss sozusagen winkelig bezüglich der Bodenseite des Maschinengehäuses. Bevorzugt ist es, wenn der Strömungskanal sozusagen steil nach oben oder steil von der Bodenseite des Maschinengehäuses her weg verläuft.

Der Strömungskanal kann weiterhin in einem sich von der Antriebsachse beispielsweise zur Arbeitsrichtung hin, in einem Winkel von maximal 60°, insbesondere maximal 45° weg erstreckenden Winkelbereich verlaufen. Durch diese Definition wird deutlich, dass der Strömungskanal bzw. dessen Längsachse oder Hauptachse nahe bei der Antriebsachse verläuft.

Eine Längsachse eines durch den Absauganschluss verlaufenden Strömungskanals weist zweckmäßigerweise mindestens eine Richtungskomponente in Arbeitsrichtung auf. Mithin ist es vorteilhaft, wenn die Längsachse des Strömungskanals sozusagen nach vorn in Richtung der Arbeitsrichtung bezüglich des Maschinengehäuses geneigt ist.

Erfindungsgemäß ist vorgesehen, dass der Absauganschluss und/oder eine den Absaugbereich zumindest teilweise abdeckende Abdeckeinrichtung zwischen einer näher zu der Werkzeugaufnahme hin verstellten Abdeckstellung und mindestens einer von der Werkzeugaufnahme gegenüber der Abdeckstellung weiter entfernten Freigabestellung, z.B. anhand einer Lagereinrichtung, verstellbar ist.

Die Lagereinrichtung weist zweckmäßigerweise miteinander wechselwirkende oder zusammenwirkende Lagerkomponenten auf, die einerseits am Absauganschluss oder der Abdeckeinrichtung oder beiden und andererseits an dem Maschinengehäuse vorgesehen sind. So können beispielsweise Lageraufnahmen oder Lagervorsprünge am Maschinengehäuse vorgesehen sein, die mit korrespondierenden Lagervorsprüngen und Lageraufnahmen an dem Absauganschluss oder der Abdeckeinrichtung angeordnet sind.

Erfindungsgemäß ist vorgesehen, dass der Absauganschluss oder die Abdeckeinrichtung bei der Verstellung zwischen der Abdeckstellung und der mindestens einen Freigabestellung am Maschinengehäuse verbleiben.

Wenn die Abdeckeinrichtung am Maschinengehäuse verbleibt, wird sie relativ zu Maschinengehäuse beispielsweise verschwenkt, verschoben oder beides.

Es sind mehrere Freigabestellungen möglich, d. h. dass die Abdeckeinrichtung oder der Absauganschluss oder beide in unterschiedlich weit von der Werkzeugaufnahme entfernte Freigabestellung verstellbar sind. In den verschiedenen Freigabestellungen, beispielweise mindestens zwei Freigabestellungen, wird beispielsweise ein kleinerer oder größerer Sichtbereich auf die Werkzeugaufnahme oder das Schneidwerkzeug im Bereich der Werkzeugaufnahme freigegeben.

Die Lagereinrichtung kann ein Schiebelager, ein Schwenklager oder beides umfassen oder dadurch gebildet sein.

Bevorzugt ist es, wenn die Lagereinrichtung mindestens eine Haltekontur, beispielsweise einen Führungsvorsprung oder eine Führungsaufnahme oder beides, zum lösbaren Halten an dem Maschinengehäuse aufweist. Mithin kann also die Lagereinrichtung sozusagen zusätzlich zu ihrer Lagerfunktion zum Halten des Absauganschlusses bzw. der Abdeckeinrichtung am Maschinengehäuse vorgesehen sein.

An dieser Stelle wird deutlich, dass die Abdeckeinrichtung und/oder der Absauganschluss zwar an dem Maschinengehäuse beweglich gelagert, jedoch unverlierbar angeordnet oder gehaltert sein können. Es ist aber auch eine lösbare Halterung der Abdeckeinrichtung und/oder des Absauganschlusses am Maschinengehäuse möglich, die später noch deutlicher beschrieben wird.

Es ist vorteilhaft, wenn die Abdeckeinrichtung einen Strömungskanal zwischen dem Absaugbereich und dem Absauganschluss in der Abdeckstellung und in der mindestens einen Freigabestellung verdeckt. Insbesondere vorteilhaft ist es, wenn die Abdeckeinrichtung den Strömungskanal zwischen dem Absauganschluss und dem Absaugbereich vollständig verschließt. Dabei ist es möglich, dass beispielsweise Seitenschenkel der Abdeckeinrichtung mit dem Maschinengehäuse verbunden sind und somit den Strömungskanal verschließen. Mithin kann also die Abdeckeinrichtung in Kombination mit dem Maschinengehäuse den Strömungskanal quer zur Strömungsrichtung begrenzen. Auch wenn beispielsweise die Abdeckeinrichtung zu der Werkzeugaufnahme hin verstellt ist, ist zwischen dem Absauganschluss und dem Absaugbereich keine Fremdluftöffnung vorhanden. Eine effektive Absaugung ist gewährleistet.

Weiterhin vorteilhaft ist es, wenn ein freier Endbereich der Abdeckeinrichtung in der Abdeckstellung einem an dem Maschinengehäuse befestigten Führungskörper, z.B. einer Führungsplatte, einem Sägetisch oder dergleichen, gegenüber liegt. Beispielsweise kann zwischen der Führungsplatte oder dem Führungskörper und dem freien Endbereich nur ein kleiner Abstand vorhanden sein oder die Abdeckeinrichtung unmittelbar an dem Führungskörper mit ihrem freien Endbereich anliegen.

Weiterhin vorteilhaft ist es, wenn die Abdeckeinrichtung, beispielsweise deren freier Endbereich, das Schneidwerkzeug in der Abdeckstellung zumindest in Arbeitsrichtung vorn abdeckt. Es ist auch möglich, dass die Abdeckeinrichtung das Schneidwerkzeug seitlich, also quer zur Arbeitsrichtung, abdeckt oder auch in Arbeitsrichtung hinten verdeckt oder abdeckt.

Bevorzugt ist weiterhin eine Fixiereinrichtung, beispielsweise eine Rasteinrichtung und/oder eine Klemmeinrichtung, zum Fixieren der Abdeckeinrichtung und/oder des Absauganschlusses in mindestens einer Relativposition, beispielsweise der Abdeckstellung, der Freigabestellung oder dazwischen liegenden Stellungen bezüglich des Maschinegehäuses. So können beispielsweise Rasten oder Rastvorsprünge an einer Linearführung oder Schwenkführung der Lagereinrichtung angeordnet sein. Mithin ist es also vorteilhaft, wenn die Fixiereinrichtung an der Lagereinrichtung angeordnet ist oder ein Bestandteil derselben bildet.

Der Absauganschluss und die Abdeckeinrichtung können eine einzige Komponente oder eine integrale Einrichtung bilden. Insbesondere ist es möglich, dass der Absauganschluss ortsfest an der Abdeckeinrichtung angeordnet ist oder einen Bestandteil der Abdeckeinrichtung bildet.

Ein bevorzugtes Konzept sieht vor, dass die Hand-Werkzeugmaschine eine Halterung zum lösbaren Halten der oder einer den Absaugbereich zumindest teilweise abdeckenden Abdeckeinrichtung, beispielsweise der vorgenannten Abdeckeinrichtung, und/oder das Absauganschlusses an dem Maschinengehäuse aufweist, so dass die Abdeckeinrichtung oder Absauganschluss von dem Maschinengehäuse entfernbar ist. An dieser Stelle sei erwähnt, dass eine derart lösbare Abdeckeinrichtung oder ein derart lösbarer Absauganschluss nur in einer einzige Relativposition bezüglich der Werkzeugaufnahme am Maschinengehäuse befestigbar sein kann, aber auch wie bereits erläutert beweglich am Maschinengehäuse gelagert sein kann. Ferner kann die Abdeckeinrichtung in unterschiedlichen Relativpositionen, beispielsweise der vorgenannten Abdeckstellung und einer oder mehreren Freigabestellungen, bezüglich der Werkzeugaufnahme am Maschinengehäuse lösbar befestigbar sein.

Die vorgenannte Halterung ist vorzugsweise zumindest teilweise durch die Lagereinrichtung gebildet. Mithin kann also die Lagereinrichtung beides realisieren, einerseits eine Halterung, anderseits eine Verstelleinrichtung oder Verstellbarkeit des Absauganschlusses bzw. der Abdeckeinrichtung bezüglich des Maschinegehäuses.

Die Halterung weist zweckmäßigerweise eine Halteklammer zum Verklammern an dem Maschinengehäuse auf. Mithin können aber auch Abschnitte der Halteklammer Teile einer Staubführung oder Partikelführung sein.

Die Halterklammer weist zweckmäßigerweise zwei Klammerschenkel oder mehrere Klammerschenkel auf, die aus einer Haltestellung, in der die Halteklammer mit dem Maschinengehäuse geklammert ist, in eine Freigabestellung in einem Sinne von einander verstellbar sind, in der die Halteklammer von dem Maschinengehäuse entfernbar ist.

Zum Ergreifen der Hand-Werkzeugmaschine können mehrere der nachfolgenden Maßnahmen einzeln oder in Kombination vorgesehen sein:
Bevorzugt ist es, wenn ein Griffabschnitt des Maschinengehäuses von dem Antriebsabschnitt entgegen der Arbeitsrichtung nach hinten absteht, wobei der Griffabschnitt zum manuellen Ergreifen, beispielsweise Umgreifen, durch einen Bediener einen Griffbereich aufweist. Der Griffabschnitt kann pistolengriffartig sein.

Bevorzugt ist ein Durchmesser des Griffabschnittes derart, dass er von dem Bediener zumindest im Wesentlichen umgriffen werden kann. An einem freien Endbereich des Griffabschnittes kann eine Akkuschnittstelle oder ein Stromversorgungsanschluss, beispielsweise ein Netzkabel, angeordnet sein. Bevorzugt weist die Hand-Werkzeugmaschine bzw. deren Maschinengehäuse zwischen dem Antriebsabschnitt und einem Anschlussbereich für beispielsweise einen Energiespeicher, insbesondere Akku, eine Taillierung auf, die gleichzeitig den vorgenannten Griffabschnitt bildet.

Weiterhin ist es vorteilhaft, wenn neben dem Absauganschluss und entgegengesetzt zu der Bodenseite des Maschinengehäuses ein Handgriff vor den Absauganschluss vorsteht. Dieser Handgriff kann ein von der Maschine separater, beispielsweise an diesem mittels einer Verklemmung, Verschraubung oder sonstiger Weise befestigter Handgriff sein. Bevorzugt ist jedoch, wenn dieser Handgriff von dem Antriebsabschnitt gebildet oder an dem Antriebsabschnitt angeordnet ist.

Der vorgenannte Handgriff ist zweckmäßigerweise zwischen dem Griffabschnitt, der nach hinten entgegen der Arbeitsrichtung von dem Antriebsabschnitt absteht, und dem Absauganschluss angeordnet.

Der Antriebsabschnitt selbst kann einen Griffbereich zum manuellen Ergreifen, beispielsweise Umgreifen, durch den Bediener aufweisen. Bevorzugt ist der Antriebsabschnitt von dem nach hinten vom Antriebsabschnitt abstehenden Griffabschnitt des Maschinengehäuses weg geneigt. Beispielsweise weist der Antriebsabschnitt eine Art Griffhöcker auf, so dass er bequem ergriffen werden kann.

Bevorzugt ist es, wenn die Hand-Werkzeugmaschine mindestens einen in Richtung des herzustellenden Trennschnittes zeigenden Schnittindikator, beispielsweise eine Anzeigevorsprung aufweist. Dieser Schnittindikator kann an sich an einer beliebigen Stelle des Maschinengehäuses oder der nachfolgend erläuterten Führung, beispielsweise dem Führungskörper, angeordnet sein.

Besonders bevorzugt ist jedoch, wenn eine den Absaugbereich zumindest teilweise abdeckende Abdeckeinrichtung oder der Absauganschluss oder beide einen derartigen Schnittindikator, beispielsweise einen Anzeigevorsprung, aufweisen.

Als Schnittindikator eignet sich aber beispielsweise auch eine optische Markierung, eine farbige Anzeige oder dergleichen.

Selbstverständlich kann die Hand-Werkzeugmaschine auch optische Hilfsmittel, beispielsweise eine Lichtquelle zur Erzeugung eines auf den Trennschnitt zeigenden Lichtstrahls, aufweisen.

Eine an sich eigenständige Erfindung, die mit den oberbegrifflichen Merkmalen des Anspruches 1 eine an sich eigenständige Erfindung darstellt, ist die folgende

Maßnahme. Diese kann aber auch eine vorteilhafte Ausprägung der Erfindung, die eingangs erwähnt ist, sein.

Bevorzugt weist die Hand-Werkzeugmaschine einen lösbar an dem Maschinengehäuse befestigbaren Führungskörper, beispielweise eine Führungsplatte, einen winkeligen Führungskörper oder dergleichen, auf.

Der Führungskörper oder die Führungsplatte können fest am Maschinengehäuse befestigt sein. Es ist auch möglich, dass der Führungskörper oder die Führungsplatte anhand eines Lagers, beispielsweise eine Gehrungslagers oder Schwenklagers, schwenkbar und/oder verschieblich am Maschinengehäuse befestigt oder gelagert ist.

Es ist möglich, dass der Führungskörper oder die Führungsplatte in Bezug auf die Führung eines Absaugluftstroms zwischen dem Absaugbereich und dem Absauganschluss keine oder keine wesentliche Funktion haben. Aber auch folgendes ist möglich: An dem Führungskörper ist vorteilhaft ein Abdeckkörper angeordnet, der im an dem Maschinengehäuse montierten Zustand des Führungskörpers einen Strömungskanal zumindest teilweise begrenzt. Der Strömungskanal steht mit dem Absauganschluss in Strömungsverbindung. Mithin ist also beispielsweise ein Bereich der Werkzeugaufnahme durch den Absauganschluss oder den die Abdeckeinrichtung, die mit dem Absauganschluss verbunden ist, nicht oder nur teilweise verdeckt oder überdeckt. Der Abdeckkörper, der am Führungskörper angeordnet ist, schließt diese Lücke sozusagen. Der Abdeckkörper kann eine oder mehrere Wände umfassen. Der Abdeckkörper kann beispielsweise rohrförmig sein.

Eine Ausprägung des Abdeckkörpers sieht vor, dass er in Richtung der Oberseite des Führungskörpers zum Maschinengehäuse hin vorsteht. Die Oberseite des Führungskörpers ist beispielsweise in der Art einer Platte, einer Rippenstruktur oder dergleichen ausgestaltet. Die Oberseite ist entgegengesetzt zu einer Unterseite des Führungskörpers, die beispielsweise als eine Planfläche ausgestaltet ist. Insbesondere ist es vorteilhaft, wenn der Führungskörper ein Plattenkörper ist und/oder eine von dem Maschinengehäuse abgewandte Führungsfläche, beispielsweise ein Planfläche, zum Führen an einem Untergrund aufweist.

An dem Führungskörper kann auch eine Führungskontur zum Einhängen oder zum Führen an einer Führungsschiene, die auf das Werkstück oder einen sonstigen Untergrund auflegbar ist, vorgesehen sein.

Der Führungskörper weist zweckmäßigerweise eine Durchtrittsöffnung für das Schneidwerkzeug auf.

Der Absauganschluss kann an einer Absaughaube angeordnet sein. Die Absaughaube ist vorzugsweise in Arbeitsrichtung vor der Werkzeugaufnahme angeordnet. Zweckmäßig ist es, wenn die Absaughaube lösbar an dem Maschinengehäuse anordenbar ist, beispielsweise verrastbar oder dergleichen.

Nachfolgend werden Ausführungsbeispiele der Erfindung anhand der Zeichnung erläutert. Es zeigen:
- Figur 1: eine perspektivische Schrägansicht eines Systems, umfassend eine erfindungsgemäße Hand-Werkzeugmaschine sowie ein Sauggerät,
- Figur 2: ein Detail D1 aus Figur 1, wobei ein Absauganschluss relativ zur Werkzeugaufnahme der Hand-Werkzeugmaschine verstellt ist,
- Figur 3: eine perspektivische Schrägansicht von unten auf die Hand-Werkzeugmaschine gemäß Figuren 1, 2,
- Figur 4: eine Seitenansicht der Hand-Werkzeugmaschine, von der in
- Figur 5: eine entgegengesetzte Seite teilweise, etwa entsprechend einem Detail D2 aus Figur 4, dargestellt ist,
- Figur6: eine hintere Ansicht einer Absaughaube mit einem Absauganschluss der Hand-Werkzeugmaschine gemäß vorstehender Figuren,

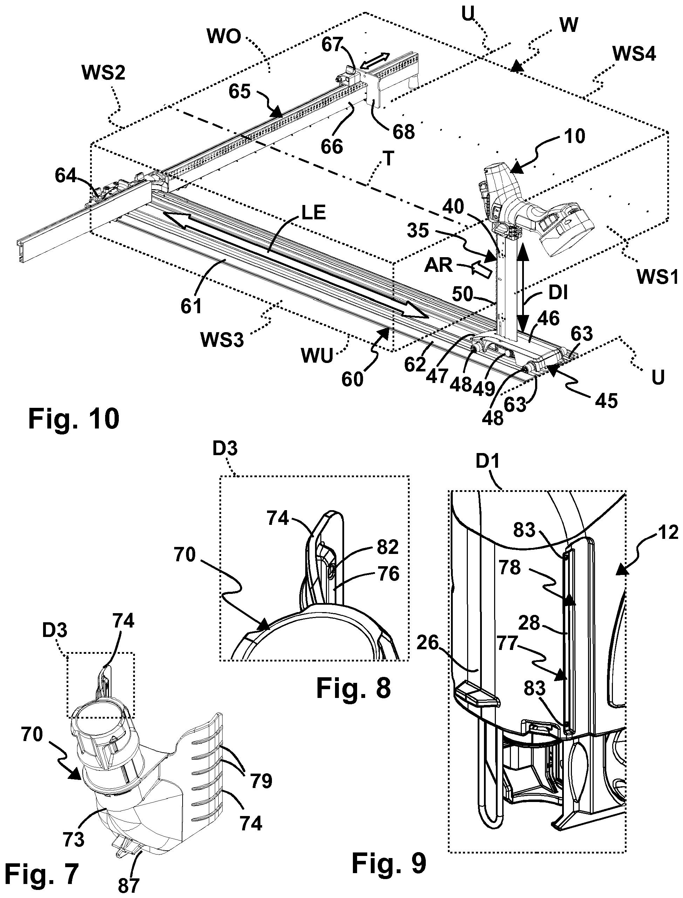

- Figur 7: eine perspektivische Schrägansicht von vorn auf die Absaughaube gemäß Figur 6,
- Figur 8: eine Detailvergrößerung D3 aus Figur 7,
- Figur 9: eine vergrößerte Darstellung eines vorderen Bereichs der Hand-Werkzeugmaschine gemäß vorstehender Figuren, etwa entsprechend einem Detail D1 in Figur 1,
- Figur 10: eine perspektivische Schrägansicht der Hand-Werkzeugmaschine gemäß vorstehender Figuren mit einem Führungssystem beim Einbringen eines Trennschnitts in ein Werkstück, und
- Figur 11: eine Hand-Werkzeugmaschine mit Absauganschluss und einem Dreh-Oszillationsantrieb.

Eine Hand-Werkzeugmaschine 10 weist ein Antriebsaggregat 11 auf. Das Antriebsaggregat 11 umfasst ein Maschinengehäuse 12. Das Maschinengehäuse 12 weist einen Griffabschnitt 12A zum Ergreifen oder Umgreifen durch einen Bediener auf. Der Griffabschnitt 12A ist zwischen einem Antriebsabschnitt 13 und einem Anschlussabschnitt 14 zum Anschließen eines elektrischen Energiespeichers 17, beispielsweise eines Akku-Packs, angeordnet. Der elektrische Energiespeicher 17 ist vorzugsweise lösbar von dem Anschlussabschnitt 14 ausgestaltet.

Die Hand-Werkzeugmaschine 10 ist vorliegend eine Akku-Maschine oder eine netzungebunden betreibbare Hand-Werkzeugmaschine, was die Handhabbarkeit erleichtert. Allerdings ist ohne weiteres auch eine kabelgebundene Variante möglich. Die Hand-Werkzeugmaschine weist in diesem Fall einen Netzanschluss 17B für ein Wechselstromnetz, insbesondere ein Anschlusskabel mit einem Stecker und/oder eine Buchse für ein Anschlusskabel, auf. Selbstverständlich kann auch eine Hybrid-Variante realisiert sein, die einerseits einen Anschluss für einen elektrischen Energiespeicher wie die Hand-Werkzeugmaschine 10, andererseits auch einen Netzanschluss 17B aufweist.

Im Bereich des Griffabschnittes 12A befindet sich ein Schalter 18, mit dem ein Antriebsmotor 16A, der im Antriebsabschnitt 13 aufgenommen ist, einschaltbar und ausschaltbar ist. Ohne weiteres kann mit dem Schalter 18 oder einem separaten, in der Zeichnung nicht dargestellten Schalter, eine Drehzahländerung bewirkt werden, d.h. dass beispielsweise eine Drehzahl des Antriebsmotors 16A durch den Schalter 18 oder mit dem Schalter 18 einstellbar ist. Eine Steuerungseinrichtung 16C zur elektrischen Ansteuerung des Antriebsmotors 16A, beispielsweise eine Leistungselektronik, eine Bestromungseinrichtung oder dergleichen, ist schematisch dargestellt. Die Steuerungseinrichtung 16C ist beispielsweise im Griffabschnitt 12A angeordnet.

Mit dem Antriebsmotor 16A ist eine Werkzeugaufnahme 19 antreibbar. Der Antriebsmotor 16A könnte beispielsweise ein Linearmotor sein, der die Werkzeugaufnahme 19 zu einer oszillierenden Linearbewegung LB direkt antreibt. Vorliegend ist jedoch ein Getriebe 16B zwischen dem Antriebsmotor 16A und der Werkzeugaufnahme 19 angeordnet, welches eine drehende Bewegung des Antriebsmotors 16A in eine oszillierende Linearbewegung LB oder eine Hin- und Her-Bewegung umwandelt.

Der Antriebsmotor 16A und das Getriebe 16B bilden insgesamt einen Antrieb 16 der Hand-Werkzeugmaschine 10. Es versteht sich, dass beispielsweise der Antriebsmotor 16A und/oder das Getriebe 16B auch an anderer Stelle des Maschinengehäuses 12 vorgesehen sein können, so zum Beispiel an oder in dem Griffabschnitt 12A.

Die Werkzeugaufnahme 19 ist an einer Bodenseite 29 des Maschinengehäuses 12 angeordnet.

Die Hand-Werkzeugmaschine 10 bzw. deren Antriebsaggregat 11 ist lösbar mit einem Schneidwerkzeug 40 verbindbar. Das Schneidwerkzeug 40 umfasst ein Stützteil 41, dessen oberer Längsendbereich an einer Werkzeughalterung 20, die am Maschinengehäuse 12 vorgesehen ist, befestigt werden kann. In einer Führungsaufnahme 44 des Stützteils 41 ist ein Schneidkörper 50 mit einem linearen Bewegungsfreiheitsgrad entsprechend der Linearbewegung LB beweglich gelagert. Der Schneidkörper 50 ist durch das Antriebsaggregat 11 antreibbar.

Der Schneidkörper 50 weist eine vordere, beim Betrieb der

Hand-Werkzeugmaschine bewegte und somit bewegliche Schneidkontur 51 sowie einen Antriebsabschnitt oder Schaft 52 auf, der mit der Werkzeugaufnahme 19 in Eingriff gebracht werden kann, beispielsweise in diese eingesteckt werden kann. Die Schneidkontur 51 ist vorliegend als eine Art Messerkante oder Messekontur ausgestaltet. Ohne weiteres wäre auch eine Schneidkontur mit Sägezähnen oder dergleichen möglich.

Der Schaft 52 verrastet vorzugsweise mit der Werkzeugaufnahme 19 oder in der Werkzeugaufnahme 19. Zum Lösen und/oder Schließen der Werkzeugaufnahme 19 ist vorzugsweise eine Betätigungshandhabe 19A, beispielsweise eine Betätigungshülse, vorgesehen.

Einen Halt an dem Maschinengehäuse 12 erfährt das Schneidwerkzeug 40 auch durch die Werkzeughalterung 20, die das Stützteil 41 festhält. Ein Längsendbereich 42 des Stützteils 41 ist in der Werkzeughalterung 20 aufgenommen. Die Werkzeughalterung 20 weist einen Deckel 21 auf, der offenbar ist, um den Längsendbereich 42 in die Werkzeughalterung 20 einzubringen. Der Deckel 21 ist beispielsweise anhand eines Schwenklagers 25 zwischen einer Offenstellung und einer Schließstellung verstellbar. In der Schließstellung ist das Schneidwerkzeug 40, insbesondere dessen Montagebereich oder Längsende 42 in der Werkzeughalterung 20 fixierbar, insbesondere anhand einer Betätigungshandhabe 23, beispielsweise einer Klemmschraube. Allerdings sei an dieser Stelle betont, dass das Stützteil 41 eine Option darstellt, d. h. dass eine erfindungsgemäße Hand-Werkzeugmaschine oder weiteres auch zum Antreiben eines Schneidwerkzeugs ohne ein derartige Stützteil, beispielsweise in der Art eines Sägeblatts einer Stichsäge, vorgesehen sein kann.

Zum Einbringen eines Trennschnittes T in ein Werkstück W können bei der Hand-Werkzeugmaschine 10 Führungsmittel oder Führungshilfen vorgesehen sein, so zum Beispiel ein an dem Maschinengehäuse 12 lösbar befestigbar Führungskörper 55 oder Führungstisch. Der Führungskörper ist beispielsweise an der Seite, an der das Schneidwerkzeug 40 am Maschinengehäuse 12 befestigbar ist, ebenfalls am Maschinengehäuse 12 befestigbar. Der Führungskörper 55 weist eine plattenartige Gestalt auf. Der Führungskörper 55 umfasst beispielsweise einen Plattenkörper 56, der auf dem Werkstück W oder einer Führungsschiene 60 entlang geführt werden kann.

Der Führungskörper 55 ist ein Gleitkörper, der auf einem Untergrund entlang gleitet und weist keine Rollen auf, wobei dies auch prinzipiell möglich ist. Zur Führung des Führungskörpers 55 an der Führungsschiene 50 sind zweckmäßigerweise Führungsaufnahmen 57, insbesondere an den Längsseiten des Plattenkörpers 56 vorgesehen. Die Führungsaufnahmen 57 können mit einem Führungsvorsprung 62 der Führungsschiene 60 in Eingriff gebracht werden, sodass der Führungskörper 55 entlang der Führungsschiene 60 linear geführt ist, beispielsweise in einer Arbeitsrichtung AR, in der das Schneidwerkzeug 40 in das Werkstück W einschneidet.

Der Führungskörper 55 kann mit seiner von dem Maschinengehäuse 12 abgewandten Führungsseite oder Führungsfläche unmittelbar auf einem Werkstück entlang geführt werden, beispielsweise auf einer Werkstückoberseite WO des Werkstücks W. Es ist aber auch möglich, beispielsweise die Führungsschiene 60 auf das Werkstück W aufzulegen und den Führungskörper 55 an der Führungsschiene 60 entlang zu führen. Dabei steht das Schneidwerkzeug 40 vor eine Unterseite der Führungsschiene 60 vor.

Es ist aber auch möglich, dass an dem Schneidwerkzeug 40, insbesondere dessen vom Maschinengehäuse 12 abgewandten freien Längsendbereich 43, ein Führungsschlitten 45 angeordnet wird. Der Führungsschlitten 45 dient zum Führen der Hand-Werkzeugmaschine 10 auf einem Untergrund U, insbesondere der Führungsschiene 60. Der Führungsschlitten 45 kann lösbar mit dem Schneidwerkzeug 40 verbunden werden, beispielsweise anhand einer Befestigungseinrichtung 49, von der in der Zeichnung lediglich ein Betätigungselement, insbesondere ein Betätigungshebel oder Klemmhebel, dargestellt ist. Mit der Befestigungseinrichtung 49 ist der Führungsschlitten 45 am Schneidwerkzeug 40 insbesondere formschlüssig verbindbar. Der Führungsschlitten 45 weist einen Schlittenkörper 46 auf, an dessen in Arbeitsrichtung AR vorderen Seite eine Aufgleitschräge 47 vorgesehen ist.

Der Führungsschlitten 45 könnte als ein Gleitschlitten ausgestaltet sein, der an einem Untergrund, beispielsweise der Führungsschiene 60, entlang gleitet. Vorzugsweise ist jedoch als ein Rollschlitten ausgestaltet und weist Rollen 48 auf, die beispielsweise in Führungsvertiefungen 63, die ebenso wie der Führungsvorsprung oder die Führungsvorsprünge 62 in Längsrichtung der Führungsschiene 60 verlaufen, führbar sind. Somit ist der Führungsschlitten 45 einerseits freie auf einem Untergrund U führbar, d. h. ohne die Führungsschiene 60 zu benutzen, andererseits aber auch mit derselben.

Das Werkstück W ist mit seiner Werkstückunterseite WO auf die Führungsschiene 60 auflegbar. Zur Herstellung eines geradlinigen und mit einem einstellbaren Winkel bezüglich der Außenkonturen des Werkstücks W verlaufenden Trennschnittes T eignet sich schon allein die Anordnung aus Führungsschiene 60 und Führungsschlitten 45.

Zudem ist noch ein Seitenanschlagkörper 65 vorteilhaft, der anhand einer Schwenklagereinrichtung 64 bezüglich der Führungsschiene 60 schwenkbar gelagert und in einstellbaren Winkelpositionen bezüglich der Führungsschiene 60 fixierbar ist. Der Seitenanschlagkörper 65 ist beispielsweise als eine Anschlagschiene ausgestaltet, hat also eine Längsgestalt. Das Werkstück W kann beispielsweise mit seiner Stirnseite oder Werkstückseite WS2 stirnseitig an eine Seitenanschlagfläche 66 des Seitenanschlagkörpers 65 angelegt werden.

Eine genaue Ausrichtung des Werkstücks W parallel zu einer Längserstreckung LE der Führungsschiene 60 ist vorzugsweise auch dadurch erzielbar, dass an dem Seitenanschlagkörper 65 einen Queranschlagkörper 67 angeordnet oder anordenbar ist. Der Queranschlagkörper 67 weist eine Queranschlagfläche 68 auf, an die das Werkstück W beispielsweise mit seiner Werkstückseite WS4 angelegt werden kann. Die Queranschlagfläche 68 weist einen einstellbaren oder vorbestimmten Querabstand zur Führungsschiene 60 auf.

Wenn das Werkstück W auf der Führungsschiene 60 aufliegt und durch den Seitenanschlagkörper 65 und den Queranschlagkörper 67 bezüglich der Führungsschiene 60 ausgerichtet ist, lässt sich der Trennschnitt T besonders einfach herstellen. Dabei ist die Hand-Werkzeugmaschine 10 auf der Oberseite WO des Werkstücks W, während der Führungsschlitten 65 unter dem Werkstück W, nämlich an dessen Werkstückunterseite WU, auf der Führungsschiene 60 entlang geführt wird. Der Bediener sieht zwar diese Führung nicht. Dennoch kann das Werkstück W von seiner Werkstückseite WS1 zur Werkstückseite WS2 zwischen den Werkstückseiten WS3 und WS4 durch getrennt werden, also der Trennschnitt T eingebracht werden.

Insbesondere in diesem Anwendungsfall, aber auch bei anderen Handhabung der Hand-Werkzeugmaschine 10 ist eine effektive und dennoch ergonomische Absaugung von Partikeln, die bei der Herstellung des Trennschnittes T anfallen, einfach realisierbar.

Am Antriebsabschnitt 13 ist ein Absauganschluss 15, beispielsweise ein Anschlussstutzen zum Anschließen einer Absaugeinrichtung 120, z.B. eines Saugschlauches 100 vorgesehen. Über den Absauganschluss 15 können beim Betrieb der Hand-Werkzeugmaschine 10 anfallende Späne, Staub oder dergleichen, abgesaugt werden. Der Absauganschluss 15 ist in Strömungsverbindung mit einem Absaugbereich 30 nahe oder an der Werkzeugaufnahme 19.

Der Saugschlauch 100 kann mit einer ortsfesten Absaugeinrichtung, beispielsweise einer Werkstatt-Absaugung, verbunden oder verbindbar sein. Bevorzugt ist jedoch, wenn der Saugschlauch 100 mit seinem Anschlussstück 101 mit einem mobilen Staubsauger oder Sauggerät 110, beispielsweise einem typischen Werkstattsauger, verbunden oder verbindbar ist. Das Sauggerät 110 weist ein Saugergehäuse 111 auf, in welchem ein Staubsammelraum 112 zum Sammeln von Partikeln angeordnet ist. Zur Erzeugung eines Saugstroms S dient ein Saugaggregat 113, welches beispielsweise über ein nicht dargestelltes Netzkabel oder über einen mobilen Energiespeicher, beispielsweise in der Art des Energiespeichers 17, mit Strom versorgbar ist. Das Saugergehäuse 111 ist anhand von Rollen 114 auf einem Untergrund rollbar, so dass nicht nur der Saugschlauch 100 Bewegungen der Hand-Werkzeugmaschine 10 mitmachen kann, sondern das Sauggerät 110 ggf. auch sozusagen mitgeschleppt werden kann, wenn die Hand-Werkzeugmaschine 10 Trennschnitte in ein Werkstück einbringt.

Der Saugschlauch 100 ist mit dem Anschlussstück 101 an einen Sauganschluss 115 des Sauggeräts 110 angeschlossen oder anschließbar. Am anderen Längsende des Saugschlauches 100 befindet sich ein Anschlussstück 102, das mit dem Absauganschluss 15 verbindbar ist. Das Anschlussstück 102 ist beispielsweise als eine Anschlussmuffe ausgestaltet. Der Ansauganschluss 15 hat eine zu dem Anschlussstück 102 passende Kontur und Geometrie. Beispielsweise ist der Absauganschluss 15 an einem Anschlussstutzen 71 vorgesehen oder ausgebildet. Am Anschlussstutzen 71 sind Formschlusskonturen 72, insbesondere Steck-Formschlusskonturen und/oder Dreh-Formschlusskonturen, angeordnet, die in formschlüssigen Eingriff mit Formschlusskonturen 103 des Anschlussstückes 102 gebracht werden können. Bevorzugt besteht das Anschlussstück 102 und/oder der Anschlussstutzen 71 aus Gummi oder einem sonstigen nachgiebigen Material, so dass sich die Konturen des Anschlussstutzens 71 und des Anschlussstückes 102 sozusagen aneinander anschmiegen können. Eine oder beide der Komponenten Anschlussstutzen 71 oder Anschlussstück 102 kann aber ohne weiteres auch aus einem harten Material, beispielsweise aus einem Kunststoffmaterial, aus Metall oder dergleichen, bestehen.

Der Absauganschluss 15 ist in Arbeitsrichtung AR vorn am Maschinengehäuse 12 angeordnet. Der Absauganschluss 15 ist an einer Abdeckeinrichtung 70 vorgesehen, die in einer in der Zeichnung nicht dargestellten Ausführungsform fest mit dem Maschinengehäuse 12 verbunden sein kann, vorliegend jedoch ein separates, relativ zum Maschinengehäuse 12 bewegliches Bauteil bildet.

Die Abdeckeinrichtung 70 ist beispielsweise in der Art einer Absaughaube ausgestaltet. Die Abdeckeinrichtung 70 weist eine Abdeckwand 73 auf, die sich in Gebrauchslage der Abdeckeinrichtung 70, wenn sie an dem Maschinengehäuse 12 befestigt ist, vor einer Frontwand 26 des Maschinengehäuses 12 erstreckt. Die Abdeckwand 73 hat eine teilweise rohrförmige Gestalt oder eine haubenartige Gestalt, wobei sie an ihrer von der Werkzeugaufnahme 19 abgewandten Seite in den Anschlussstutzen 71 ausmündet.

Die Abdeckeinrichtung 70 bildet beispielsweise eine Absaughaube 86 oder ist als eine solche ausgestaltet.

Von der Abdeckwand 73 stehen seitlich Halteschenkel zum Halten an dem Maschinengehäuse 12 ab. Die Halteschenkel sind beispielsweise Klammerschenkel 74 einer Halteklammer 75, die von der Abdeckeinrichtung 70 gebildet ist oder die an der Abdeckeinrichtung 70 angeordnet ist. Die Abdeckwand 73 bildet sozusagen den Grundschenkel, von dem die Klammerschenkel 74 der Halteklammer 75 abstehen.

An den Klammerschenkeln 74 sind Führungsvorsprünge 76 angeordnet, die in Führungsaufnahmen 28 an Seitenwänden 27 des Antriebsabschnittes 13 eingreifen. Die Führungsvorsprünge 76 sind an den einander zugewandten Innenseiten der Klammerschenkel 74 angeordnet. Vor diese Innenseiten stehen die Führungsvorsprünge 76 vor. Die Führungsaufnahmen 28 sind in der Art von Führungsnuten ausgestaltet. Anstelle der Führungsvorsprünge 76 könnten auch einzelne Führungsvorsprünge, insbesondere in Längsabstand zueinander oder in einer Reihenanordnung nebeneinander, vorgesehen sein.

Wenn die Führungsvorsprünge 76 und die Führungsaufnahmen 28 gleiche Längen oder Längserstreckungen aufweisen, kann die Abdeckeinrichtung 70 in nur einer einzigen Relativposition bezüglich der Werkzeugaufnahme 19 an dem Maschinengehäuse 12 befestigt werden. Vorliegend jedoch sind die Führungsaufnahmen 28 länger als die Führungsvorsprünge 76 oder eine Reihenanordnung von Führungsvorsprüngen (nicht dargestellt), so dass die Führungsvorsprünge 76 oder die nicht dargestellten Reihenanordnungen von Führungsvorsprüngen in den Führungsaufnahmen 28 entlang einer Stellachse AZ verschieblich sind. Somit kann die Abdeckeinrichtung 70 zwischen einer von der Werkzeugaufnahme 19 entfernteren Freigabestellung FS und einer näher zu der Werkzeugaufnahme 19 und somit zum Schneidwerkzeug 40 hin verstellten Abdeckstellung AS verstellt werden. In der Freigabestellung FS ist die Werkzeugaufnahme 19, insbesondere ein oberer Abschnitt des Schneidwerkzeugs 40, besser einsehbar, während in der zur Werkzeugaufnahme 19 hin verstellten Abdeckstellung AS die Werkzeugaufnahme 19 und insbesondere dem Maschinengehäuse 12 zugewandte Längsendbereich des Schneidwerkzeugs 40 ganz oder im Wesentlichen verdeckt ist.

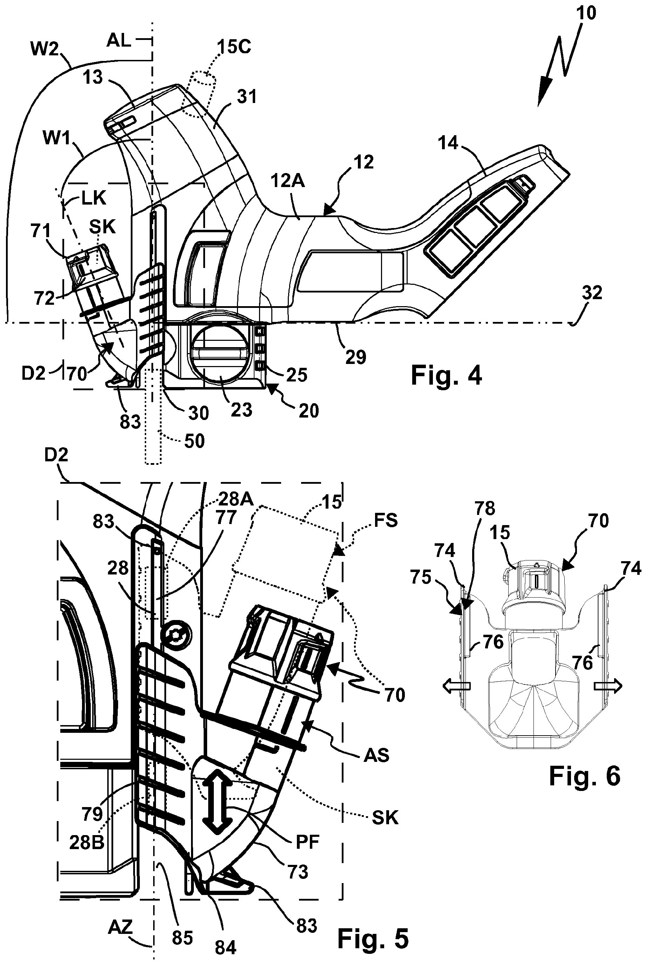

Mithin bilden also die Führungsvorsprünge 76 und die Führungsaufnahmen 28 Bestandteile einer Lagereinrichtung 77 zum verstellbaren Lagern des Absauganschlusses 15 oder der Abdeckeinrichtung 70 bezüglich der Werkzeugaufnahme 19, zudem auch Bestandteile einer Halterung 78, mit der die Abdeckeinrichtung 70 und somit auch der Absauganschluss 15 an dem Maschinengehäuse 12 lösbar befestigbar ist. Der Bediener kann nämlich die beiden Klammerschenkel 74 in einem Sinne voneinander weg ziehen (in Figur 6 durch Pfeile angedeutet), um auf diesem Wege die Führungsvorsprünge 76 aus den Führungsaufnahmen 28 heraus zu bewegen und die Abdeckeinrichtung 70 vom Maschinengehäuse 12 zu entfernen. In Bezug auf die Halterung 78 bilden die Führungsvorsprünge 76 Formschlusskonturen zum formschlüssigen Halten der Abdeckeinrichtung 70 an der Hand-Werkzeugmaschine 10, insbesondere dem Maschinengehäuse 12. Man erkennt, dass die Lagereinrichtung 77 eine Option darstellt. Es ist nämlich beispielsweise auch möglich, dass die Abdeckeinrichtung 70 durch Lösen vom Maschinengehäuse 12 zwischen der Abdeckstellung AS und der mindestens einen Freigabestellung FS verstellt wird. Beispielsweise wäre es möglich, dass die beiden Klammerschenkel 74 in einem Sinne voneinander weggezogen werden, wodurch die Führungsvorsprünge 76, die im diesem Fall Haltevorsprünge sind, aus Formschlussaufnahmen 28A, 28B herausgelangen, die z.B. entsprechend den Führungsaufnahmen 28 am Maschinengehäuse 12 angeordnet sind. So können die Formschlussaufnahmen 28A, 28B für die Führungsvorsprünge oder Haltevorsprünge 76 für die Abdeckstellung AS und die Freigabestellung FS vorgesehen sein. Die Formschlussaufnahme 28A, 28B sind in der Zeichnung schematisch angedeutet.

An den von dem Maschinengehäuse 12 abgewandten Außenseiten der Klammerschenkel 74 sind vorzugsweise Griffkonturen 79 vorgesehen, mit denen der Bediener die Abdeckeinrichtung 70 bequem ergreifen und entlang des Maschinengehäuses 12 linear verstellen kann. Eine solche lineare Verstellung ist durch einen Pfeil PF in der Zeichnung angedeutet.

Für eine oder mehrere Längspositionen der Abdeckeinrichtung 70 bezüglich des Maschinengehäuses 12, vorliegend den jeweiligen Längsendpositionen, der Lagereinrichtung 77, dementsprechend bezüglich der Freigabestellung FS und Abdeckstellung AS, ist eine Fixiereinrichtung 80 in Gestalt einer Rasteinrichtung vorgesehen. Die Fixiereinrichtung 80 umfasst beispielsweise Rastvorsprünge 81, die an oder in den Führungsaufnahmen 28 vorgesehen sind und in Eingriff mit Rastaufnahmen 28 an den Führungsvorsprüngen 76, insbesondere dessen Stirnseiten, gebracht werden können. Selbstverständlich ist auch eine andere Art von Verrastung oder sonstiger Fixierung der Abdeckeinrichtung 70 bezüglich des Maschinengehäuses 12 ohne weiteres möglich, so z.B. mit Hilfe einer angefederten Kugel, anhand von Rasthaken, einer Verklemmung, einer Klemmschraube oder dergleichen.

In der Zeichnung ist eine obere Freigabestellung FS eingezeichnet. Es ist durchaus möglich, dass die Abdeckeinrichtung 70 zwischen der Freigabestellung FS und der Abdeckstellung AS in eine oder mehrere Zwischenpositionen bringbar, insbesondere in den Zwischenpositionen verrastbar, ist. Auch diese sind dann Freigabestellung und/oder sozusagen teilweise abdeckende Abdeckstellungen der Abdeckeinrichtung 70. Ein freier Endbereich 87 kann dem Führungskörper 55 in der Abdeckstellung AS unmittelbar gegenüberliegen. Es ist möglich, dass der freie Endbereich 87 an der dem Maschinengehäuse 12 gegenüberliegenden Seite des Führungskörpers 55 in der Abdeckstellung AS anliegt oder jedenfalls ein geringer Spalt zwischen dem freien Endbereich 87 und dieser Seite des Führungskörpers 55 vorhanden ist.

Selbst wenn die Abdeckeinrichtung 70 ihre Abdeckstellung AS einnimmt und somit eine Sicht auf das Schneidwerkzeug 40 behindert oder verhindert, kann der Bediener die Richtung und den Verlauf des beim Bewegen der Hand-Werkzeugmaschine 10 in Arbeitsrichtung AR entstehenden Trennschnittes T gut erkennen, da nämlich an der Abdeckeinrichtung 70 ein Schnittindikator 83 vorgesehen ist, der in Richtung des herzustellenden Trennschnittes T weist. Der Schnittindikator 83 ist beispielsweise als ein Vorsprung an einem der Werkzeugaufnahme 19 zugewandten Fußbereich 84 der Abdeckeinrichtung 70 vorgesehen.

Eine Sicht auf das Schneidwerkzeug 40 dadurch erleichtert sein, dass seitlich am Fußbereich 84 der Abdeckeinrichtung 70 mindestens eine Aussparung 85 vorgesehen ist. Insbesondere sind an einander entgegengesetzten Seiten, quer zur Arbeitsrichtung AR, jeweils Aussparungen 85 vorgesehen.

Wenn die Hand-Werkzeugmaschine 10 ohne den Führungskörper 55 betrieben wird, kann sozusagen Falschluft seitlich zwischen den Klammerschenkeln 74 und der Abdeckwand 73 in Richtung des Anschlussstutzens 71 und somit des Absauganschlusses 15 strömen, insbesondere durch die Aussparungen 85, durch die diese Falschluft strömen kann. Aufgrund der in der Regel ausreichend großen Absaugleistung der Absaugeinrichtung 120 ist dies jedoch unproblematisch.

Selbst wenn die Abdeckeinrichtung 70 ihre Freigabestellung FS einnimmt, ist dennoch ein effektiver Strömungskanal zwischen dem dem Maschinengehäuse 12 zugewandten Längsendbereich 42 des Schneidwerkzeugs 40 bzw. der Werkzeugaufnahme 19 einerseits und andererseits dem Absauganschluss 15 vorhanden, was man in Figur 5 sehen kann. Die Abdeckeinrichtung 70 bildet nämlich einen Strömungskanal SK aus, der von der Bodenseite 29 des Maschinengehäuses 12 aus einem Bereich nahe der Werkzeugaufnahme 19 in Richtung des Absauganschlusses 15 im Wesentlichen geradlinig verläuft. Eine Längsachse LK des Strömungskanals SK ist in einem Winkel W1 bezüglich einer Antriebsachse AL um einen Winkel W1 geneigt, der beispielsweise etwa 30 Grad beträgt. Somit strömt der Saugstrom S entlang des Strömungskanals SK von der Bodenseite 29 her gesehen steil nach oben, jedoch im Wesentlichen geradlinig weg, was eine effektive Absaugung ermöglicht. Das Schneidwerkzeug 40 wird entlang der Antriebsachse AL durch den Antrieb der Hand-Werkzeugmaschine 10 linear oszillierend hin und her angetrieben.

Bei Gebrauch des Führungskörpers 55 sind auch die Aussparungen 85 ganz oder zumindest im Wesentlichen verdeckt. So ist beispielsweise an einer Oberseite des Plattenkörpers 56 ein Abdeckkörper 58 oder eine Anordnung derartiger Abdecckörper vorgesehen, die zum Maschinengehäuse 12 vorstehen und sozusagen einen Absaugbereich 30 seitlich neben der Werkzeugaufnahme 19 manteln oder zumindest partiell einhausen. Die Abdeckeinrichtung 70 kann über die im Wesentlichen parallel zur Arbeitsrichtung AR verlaufenden oder angeordneten Abdecckörper 58 hinweg bewegt werden, d.h. die Abdeckkörper 58 greifen in einen Innenraum der Abdeckeinrichtung 70 ein, zumindest dann, wenn diese in die Abdeckstellung AS verstellt ist.

Obwohl der Saugschlauch 100 beim Betrieb der Hand-Werkzeugmaschine 10 an sich hinderlich sein kann, ist er dies in der Praxis nicht. Zum einen kommt es auf eine freie Sicht des Bedieners in Arbeitsrichtung AR unmittelbar vorder Hand-Werkzeugmaschine 10 in Richtung des herzustellenden Trennschrittes T in manchen Anwendungsfällen, so z.B. bei Gebrauch des Führungsschlittens 45 zusammen mit der Führungsschiene 60, nicht an, zum anderen kann der Bediener die Hand-Werkzeugmaschine 10 nicht nur an dem sozusagen taillierten Griffabschnitt 12A umgreifen, d.h. an einem Bereich in Arbeitsrichtung AR hinter dem Antriebsabschnitt 13, sondern auch am Antriebsabschnitt 13 selbst. Dieser ist nämlich in der Art eines von dem Griffabschnitt 12A in Richtung der Arbeitsrichtung AR weg geneigter Höcker ausgestaltet, der von einem Bediener bequem umgriffen werden kann. Am von der Werkzeugaufnahme 19 abgewandten freien Endbereich ist der Antriebsabschnitt 13 nämlich mit einem Griffbereich 31 ausgestattet, der von einem Bediener bequem umgriffen werde kann. Dabei greift der Bediener sozusagen am Saugschlauch 100 vorbei, wenn er die Hand-Werkzeugmaschine 10 ergreift.

Die Bodenseite 29 des Maschinengehäuses 12 weist eine Haupterstreckungsachse 32 auf. Zu der Haupterstreckungsachse 32 ist die Antriebsachse AL winkelig, vorzugsweise etwa rechtwinkelig. Mithin steht also das Schneidwerkzeug 40 in einem Winkel von etwa 90 Grad, beispielsweise 110 bis 80 Grad, von der Bodenseite 29 des Maschinengehäuses 12 ab.

Der Absauganschluss 15 befindet sich in einem Winkelbereich W2 oder Sektor zwischen einerseits der Haupterstreckungsachse 32 der Bodenseite 29 und andererseits der Antriebsachse AL, wobei dieser Winkelbereich W2 vorliegend exakt oder etwa 90 Grad beträgt.

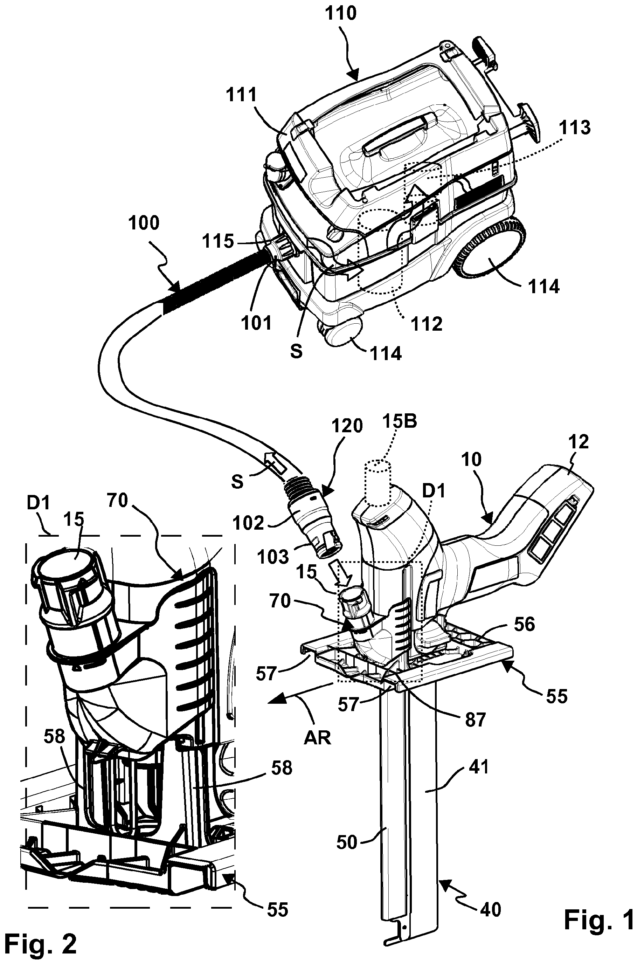

Es versteht sich, dass der Absauganschluss 15 in dieser Winkellage nur eine Option darstellt. Ein in Figur 1 dargestelltes Ausführungsbeispiel sieht beispielsweise vor, dass der Absauganschluss 15 im Wesentlichen koaxial oder parallel zur Antriebsachse AL ist, was exemplarisch mit einem Absauganschluss 15B dargestellt ist.

Auch ein in Arbeitsrichtung AR leicht nach hinten geneigter Absauganschluss ist möglich, beispielsweise ebenfalls am Antriebsabschnitt 13, jedoch an dessen zu dem Griffabschnitt 12A zugewandten Seite. Ein derartiger Absauganschluss 15C ist in Figur 4 schematisch angedeutet.

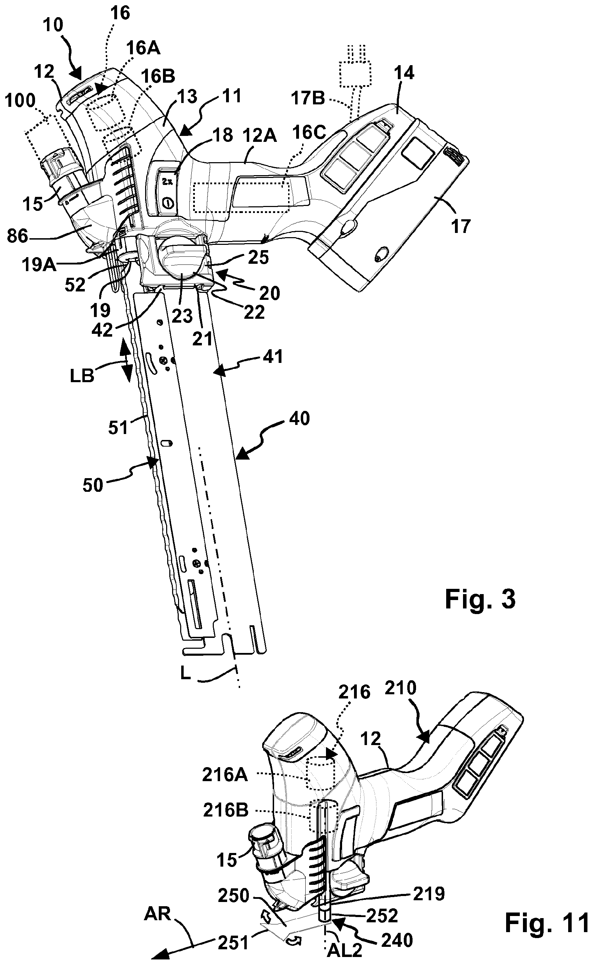

Eine Hand-Werkzeugmaschine 210 gemäß Figur 11 ist beispielsweise eine Oszillationssäge oder -schneidmaschine, die einen Antrieb 216 zu einem dreh-oszillierenden Antrieb eines Schneidwerkzeugs 240 aufweist. Die Hand-Werkzeugmaschine 210 entspricht bezüglich ihres Maschinengehäuses 12 sowie des Absauganschlusses 15 der Hand-Werkzeugmaschine 10, weist jedoch mit ihrem Antrieb 216 ein anderes Antriebskonzept auf.

Der Antrieb 216 umfasst beispielsweise einen Antriebsmotor 216A, der unmittelbar das Schneidwerkzeug 240 zu einer Oszillationsdrehbewegung antreiben könnte. Vorliegend ist jedoch zwischen den Antriebsmotor 216A und eine Werkzeugaufnahme 219, an der das Schneidwerkzeug 240 angeordnet ist, ein Getriebe 216B geschaltet, welches beispielsweise eine umlaufende Drehbewegung des Antriebsmotors 216A in eine Oszillationsdrehbewegung umwandelt.

Das Schneidwerkzeug 240 wird dementsprechend zu einer durch Pfeile angedeuteten Oszillationsbewegung um eine Antriebsachse AL2 dreh-angetrieben, sodass seine Schneidkontur 251 eine dementsprechende Dreh-Oszillationsbewegung durchläuft.

Das Schneidwerkzeug 240 weist einen Schaft oder Antriebsabschnitt 252 zur Anordnung oder Befestigung an der Werkzeugaufnahme 219 auf. Von dem Antriebsabschnitt 252 steht ein klingenartiger Schneidkörper 250 in Arbeitsrichtung AR, jedenfalls winkelig, von der Werkzeugaufnahme 219 und dem Antriebsabschnitt 252 ab. An einer von dem Schaft 252 abgewandten freien Seite des Schneidkörpers 250 ist die Schneidkontur 251 angeordnet, bei der es sich beispielsweise um eine Messerkontur, aber auch um eine Sägekontur oder beides handeln kann. Auch bei diesem Ausführungsbeispiel erfolgt die Absaugung in Arbeitsrichtung AR vorn. Dabei ist es möglich, dass wie beim in der Zeichnung dargestellten Ausführungsbeispiel die Schneidkontur 251 in Arbeitsrichtung AR vor dem Absauganschluss 15 angeordnet ist. Sie könnte aber auch ohne weiteres bezüglich der Arbeitsrichtung AR weiter hinten sein, also näher bei der Werkzeugaufnahme 219.

## Patentansprüche

1. Handgeführte Hand-Werkzeugmaschine (10) zur Herstellung eines Trennschnittes (T) in ein Werkstück (W) entlang einer Arbeitsrichtung (AR) anhand eines Schneidwerkzeugs (40), das bei einem Führen der Hand-Werkzeugmaschine (10) an dem Werkstück (W) entlang in das Werkstück (W) einschneidet, wobei die Hand-Werkzeugmaschine (10) einen Antrieb (16) mit einem Antriebsmotor (16A) und eine durch den Antrieb (16) oszillierend bezüglich einer Antriebsachse (AL) hin und her antreibbare Werkzeugaufnahme (19) zur Aufnahme des Schneidwerkzeugs (40) aufweist, wobei der Antriebsmotor (16A) in einem Maschinengehäuse (12) der Hand-Werkzeugmaschine (10) aufgenommen ist, wobei die Werkzeugaufnahme (19) an einer Bodenseite (29) des Maschinengehäuses (12) angeordnet ist, von der das Schneidwerkzeug (40) in einer an der Werkzeugaufnahme (19) angeordneten Gebrauchslage absteht und eine Schneidkontur (51) des Schneidwerkzeugs (40) in Arbeitsrichtung (AR) nach vorn orientiert ist, und wobei die Hand-Werkzeugmaschine (10) einen Absauganschluss (15) zum Anschließen einer Absaugeinrichtung (120), insbesondere eines Sauggeräts (110), zu einem Absaugen von bei einer Bearbeitung des Werkstücks (W) anhand des Schneidwerkzeugs (40) entstehenden Partikeln aufweist, wobei der Absauganschluss (15) in Strömungsverbindung mit einem Absaugbereich (30) der Hand-Werkzeugmaschine (10) steht, an oder in dem die Werkzeugaufnahme (19) angeordnet ist, wobei der Absauganschluss (15) an einem in Arbeitsrichtung (AR) vorderen Antriebsabschnitt (13) des Maschinengehäuses (12) angeordnet ist, wobei sie einen insbesondere befestigbaren Führungskörper (55), insbesondere eine Führungsplatte, aufweist, wobei der Führungskörper (55) eine von dem Maschinengehäuse (12) abgewandte Führungsfläche, insbesondere eine Planfläche, zum Führen an einem Untergrund (U) aufweist, und wobei der Absauganschluss (15) und/oder eine den Absaugbereich (30) zumindest teilweise abdeckende Abdeckeinrichtung (70) zwischen einer näher zu der Werkzeugaufnahme (19) hin verstellten Abdeckstellung (AS) und mindestens einer von der Werkzeugaufnahme (19) gegenüber der Abdeckstellung (AS) weiter entfernteren Freigabestellung (FS) anhand einer Lagereinrichtung (77) verstellbar ist, wobei der Absauganschluss (15) oder die Abdeckeinrichtung (70) bei der Verstellung zwischen der Abdeckstellung (AS) und der mindestens einen Freigabestellung (FS) am Maschinengehäuse (12) verbleiben, **dadurch gekennzeichnet, dass** die Lagereinrichtung (77) an dem Maschinengehäuse (12) angeordnet ist und den Absauganschluss (15) oder die Abdeckeinrichtung (70) zwischen der Abdeckstellung (AS) und der Freigabestellung (FS) relativ zu dem Führungskörper (55) lagert.

2. Hand-Werkzeugmaschine (10) nach Anspruch 1, **dadurch gekennzeichnet, dass** der Absauganschluss (15) in Arbeitsrichtung (AR) vor der Werkzeugaufnahme (19) an dem Maschinengehäuse (12) angeordnet ist.

3. Hand-Werkzeugmaschine nach Anspruch 1 oder 2, **dadurch gekennzeichnet, dass** der Absauganschluss (15) innerhalb eines Winkelbereichs des Maschinengehäuses (12) angeordnet ist, der sich von der Bodenseite (29) des Maschinengehäuses (12) in Richtung der Antriebsachse (AL) über maximal 120°, insbesondere maximal 90°, erstreckt und/oder bis zur Antriebsachse (AL) erstreckt.

4. Hand-Werkzeugmaschine nach einem der vorhergehenden Ansprüche, **dadurch gekennzeichnet, dass** eine Längsachse eines durch den Absauganschluss (15) verlaufenden Strömungskanals (SK) in einem Winkel von mindestens 30°, vorzugsweise mindestens 40° oder mindestens 50° oder mindestens 60°, zu einer Haupterstreckungsachse (32) der Bodenseite (29) des Maschinengehäuses (12) verläuft und/oder in einem sich von der Antriebsachse (AL), insbesondere zur Arbeitsrichtung (AR) hin, in einem Winkel von maximal 60°, insbesondere maximal 45°, weg erstreckenden Winkelbereich verläuft.

5. Hand-Werkzeugmaschine nach einem der vorhergehenden Ansprüche, **dadurch gekennzeichnet, dass** eine Längsachse eines durch den Absauganschluss (15) verlaufenden Strömungskanals (SK) mindestens eine Richtungskomponente in Arbeitsrichtung (AR) aufweist.

6. Hand-Werkzeugmaschine nach einem der vorhergehenden Ansprüche, **dadurch gekennzeichnet, dass** die Lagereinrichtung (77) ein Schiebelager und/oder ein Schwenklager umfasst oder dadurch gebildet ist und/oder dass die Lagereinrichtung (77) mindestens eine Haltekontur, insbesondere einen Führungsvorsprung (76) und/oder eine Führungsaufnahme (28), zum lösbaren Halten an dem Maschinengehäuse (12) aufweist.

7. Hand-Werkzeugmaschine nach einem der vorhergehenden Ansprüche, **dadurch gekennzeichnet, dass** die Abdeckeinrichtung (70) einen Strömungskanal zwischen dem Absaugbereich (30) und dem Absauganschluss (15) in der Abdeckstellung (AS) und in der mindestens einen Freigabestellung (FS) verdeckt und/oder dass ein freier Endbereich (87) der Abdeckeinrichtung (70) in der Abdeckstellung (AS) einem an dem Maschinengehäuse (12) befestigten Führungskörper (55), insbesondere einer Führungsplatte, gegenüberliegt und/oder dass die Abdeckeinrichtung (70), insbesondere deren freier Endbereich (87), das Schneidwerkzeug (40) in der Abdeckstellung (AS) zumindest in Arbeitsrichtung (AR) vorn abdeckt.

8. Hand-Werkzeugmaschine nach einem der vorhergehenden Ansprüche, **dadurch gekennzeichnet, dass** sie eine Fixiereinrichtung (80), insbesondere eine Rasteinrichtung und/oder eine Klemmeinrichtung, zum Fixieren der oder einer den Absaugbereich (30) zumindest teilweise abdeckenden Abdeckeinrichtung (70) und/oder des Absauganschlusses (15) in mindestens einer Relativposition bezüglich des Maschinengehäuses (12) aufweist, wobei vorteilhaft vorgesehen ist, dass die Fixiereinrichtung (80) an der Lagereinrichtung (77) angeordnet ist, insbesondere eine Rastkontur an einer Linearführung oder einer Schwenkführung der Lagereinrichtung (77) aufweist.

9. Hand-Werkzeugmaschine nach einem der vorhergehenden Ansprüche, **dadurch gekennzeichnet, dass** der Absauganschluss (15) ortsfest an der Abdeckeinrichtung (70) angeordnet ist oder einen Bestandteil der Abdeckeinrichtung (70) bildet.

10. Hand-Werkzeugmaschine nach einem der vorhergehenden Ansprüche, **dadurch gekennzeichnet, dass** sie eine Halterung (78) zum lösbaren Halten der oder einer den Absaugbereich (30) zumindest teilweise abdeckenden Abdeckeinrichtung (70) und/oder des Absauganschlusses (15) an dem Maschinengehäuse (12) aufweist, sodass die Abdeckeinrichtung (70) oder der Absauganschluss (15) von dem Maschinengehäuse (12) entfernbar ist, wobei vorteilhaft vorgesehen ist, dass die Halterung (78) zumindest teilweise durch die Lagereinrichtung (77) gebildet ist und/oder eine Halteklammer (75) zum Verklammern an dem Maschinengehäuse (12) aufweist, wobei die Halteklammer (75) vorteilhaft zwei Klammerschenkel (74) aufweist, die aus einer Haltestellung, in der die Halteklammer (75) mit dem Maschinengehäuse (12) verklammert ist, in eine Freigabestellung (FS) in einem Sinne voneinander weg verstellbar sind, in der die Halteklammer (75) von dem Maschinengehäuse (12) entfernbar ist.

11. Hand-Werkzeugmaschine nach einem der vorhergehenden Ansprüche, **dadurch gekennzeichnet, dass** ein Griffabschnitt (12A) des Maschinengehäuses (12) von dem Antriebsabschnitt (13) entgegen der Arbeitsrichtung (AR) nach hinten absteht, wobei der Griffabschnitt (12A) einen Griffbereich zum manuellen Ergreifen, insbesondere Umgreifen, durch einen Bediener aufweist, und/oder dass neben dem Absauganschluss (15) entgegengesetzt zu der Bodenseite (29) des Maschinengehäuses (12) ein insbesondere durch das Maschinengehäuse (12) gebildeter Handgriff vor den Absauganschluss (15) vorsteht und/oder dass der Antriebsabschnitt (13) einen Griffbereich (31) zum manuellen Ergreifen, insbesondere Umgreifen, durch einen Bediener aufweist.

12. Hand-Werkzeugmaschine nach einem der vorhergehenden Ansprüche, **dadurch gekennzeichnet, dass** die oder eine den Absaugbereich (30) zumindest teilweise abdeckende Abdeckeinrichtung (70) und/oder der Absauganschluss (15) einen in Richtung des herzustellenden Trennschnittes (T) zeigenden Schnittindikator (83), insbesondere einen Anzeigevorsprung, aufweist.

13. Hand-Werkzeugmaschine nach einem der vorhergehenden Ansprüche, **dadurch gekennzeichnet, dass** der Führungskörper (55) lösbar an dem Maschinengehäuse (12) befestigt oder befestigbar ist.

14. Hand-Werkzeugmaschine nach einem der vorhergehenden Ansprüche, **dadurch gekennzeichnet, dass** der Führungskörper (55) eine Durchtrittsöffnung für das Schneidwerkzeug (40) aufweist und/oder dass der Absaugbereich (30) zwischen dem Führungskörper (55) und dem Maschinengehäuse (12) vorgesehen ist und/oder dass an dem Führungskörper (55) ein Abdeckkörper (58) angeordnet ist, der im an dem Maschinengehäuse (12) montierten Zustand des Führungskörpers (55) einen Strömungskanal (SK) zumindest teilweise begrenzt, wobei der Strömungskanal (SK) mit dem Absauganschluss (15) in Strömungsverbindung steht, wobei vorteilhaft vorgesehen ist, dass der Abdeckkörper (58) in Richtung des Maschinengehäuses (12) vor eine dem Maschinengehäuse (12) zugewandte Oberseite des Führungskörpers (55) vorsteht.

15. Hand-Werkzeugmaschine nach einem der vorhergehenden Ansprüche, **dadurch gekennzeichnet, dass** der Absauganschluss (15) an einer Absaughaube (86) angeordnet ist und/oder dass die Absaughaube (86) in Arbeitsrichtung (AR) vor der Werkzeugaufnahme (19) angeordnet ist und/oder lösbar an dem Maschinengehäuse (12) anordenbar ist.

## Claims

1. Manually guided hand-operated power tool (10) for producing a centre cut (T) in a workpiece (W) along a working direction (AR) by means of a cutting tool (40), which cuts into the workpiece (W) as the hand-operated power tool (10) is guided along the workpiece (W), wherein the hand-operated power tool (10) has a drive (16) with a drive motor (16A) and a tool holder (19) for holding the cutting tool (40), which tool holder (19) can be driven by the drive (16) in a reciprocating motion to oscillate with respect to a drive axis (AL), wherein the drive motor (16A) is accommodated in a machine housing (12) of the hand-operated power tool (10), wherein the tool holder (19) is located on a base side (29) of the machine housing (12), from which the cutting tool (40) projects in a position of use when located at the tool holder (19) and from which a cutting contour (51) of the cutting tool (40) is oriented towards the front in the working direction (AR), and wherein the hand-operated power tool (10) has an extraction port (15) for connecting an extraction device (120), in particular a suction device (110), for extracting particles arising during a machining of the workpiece (W) by means of the cutting tool (40), wherein the extraction port (15) is in flow connection with an extraction region (30) of the hand-operated power tool (10), at or in which the tool holder (19) is located, wherein the extraction port (15) is located at a drive section (13) of the machine housing (12) located in front in the working direction (AR), wherein it has an in particular attachable guide body (55), in particular a guide plate, wherein the guide body (55) has a guide surface, in particular a plane surface, averted from the machine housing (12) for guiding on a base (U), and wherein the extraction port (15) and/or a covering device (70) at least partially covering the extraction region (30) can be adjusted by means of a bearing device (77) between a covering position (AS) moved closer to the tool holder (19) and at least one release position (FS) more distant from the tool holder (19) than the covering position (AS), wherein the extraction port (15) or the covering device (70) remains at the machine housing (12) during the adjustment between the covering position (AS) and the at least one release position (FS), **characterised in that** the bearing device (77) is located at the machine housing (12) and holds the extraction port (15) or the covering device (70) between the covering position (AS) and the release position (FS) relative to the guide body (55).

2. Hand-operated power tool (10) according to claim 1, **characterised in that** the extraction port (15) is located at the machine housing (12) in front of the tool holder (19) in the working direction (AR).

3. Hand-operated power tool according to claim 1 or 2, **characterised in that** the extraction port (15) is located within an angular region of the machine housing (12) extending from the base side (29) of the machine housing (12) towards the drive axis (AL) over a maximum of 120°, in particular a maximum of 90°, and/or to the drive axis (AL).

4. Hand-operated power tool according to any of the preceding claims, **characterised in that** a longitudinal axis of a flow passage (SK) extending through the extraction port (15) extends at an angle of at least 30°, preferably of at least 40° or at least 50° or at least 60°, to a main extension axis (32) of the base side (29) of the machine housing (12) and/or extends in an angular range extending from the drive axis (AL), in particular towards the working direction (AR), at an angle of no more than 60°, in particular of no more than 45°.

5. Hand-operated power tool according to any of the preceding claims, **characterised in that** a longitudinal axis of a flow passage (SK) extending through the extraction port (15) has at least one directional component in the working direction (AR).

6. Hand-operated power tool according to any of the preceding claims, **characterised in that** the bearing device (77) comprises or is represented by a sliding bearing and/or a swivel bearing, and/or **in that** the bearing device (77) has at least one holding contour, in particular a guide projection (76) and/or a guide receptacle (28), for a releasable hold at the machine housing (12).

7. Hand-operated power tool according to any of the preceding claims, **characterised in that** the covering device (70) covers a flow passage between the extraction region (30) and the extraction port (15) in the covering position (AS) and in the at least one release position (FS), and/or **in that** a free end region (87) of the covering device (70) is opposite a guide body (55), in particular a guide plate, secured to the machine housing (12) in the covering position (AS), and/or **in that** the covering device (70), in particular its free end region (87), covers the cutting tool (40) at the front, at least in the working direction (AR), in the covering position (AS).

8. Hand-operated power tool according to any of the preceding claims, **characterised in that** it has a fixing device (80), in particular a latching device and/or a clamping device, for fixing the or a covering device (70) at least partially covering the extraction region (30) and/or the extraction port (15) in at least one relative position with respect to the machine housing (12), wherein it is advantageously provided that the fixing device (80) is located at the bearing device (77), in particular having a latching contour at a linear guide or a swivel guide of the bearing device (77).

9. Hand-operated power tool according to any of the preceding claims, **characterised in that** the extraction port (15) is located in a stationary manner at the covering device (70) or forms a part of the covering device (70).

10. Hand-operated power tool according to any of the preceding claims, **characterised in that** it has a holder (78) for releasably holding the or a covering device (70) at least partially covering the extraction region (30) and/or the extraction connection (15) at the machine housing (12), so that the covering device (70) or the extraction port (15) can be removed from the machine housing (12), wherein it is advantageously provided that the holder (78) is at least partially represented by the bearing device (77) and/or has a holding clamp (75) for clamping to the machine housing (12), the holding clamp (75) advantageously having two clamp legs (74), which can be adjusted from a holding position, in which the holding clamp (75) is clamped to the machine housing (12), away from each other into a release position (FS), in which the holding clamp (75) can be removed from the machine housing (12).

11. Hand-operated power tool according to any of the preceding claims, **characterised in that** a handle section (12A) of the machine housing (12) projects from the drive section (13) rearwards against the working direction (AR), wherein the handle section (12A) has a gripping region for manually gripping, in particular encompassing, by an operator, and/or **in that** a handle formed by the machine housing (12) in particular projects in front of the extraction port (15) adjacent to the extraction port (15) opposite the base side (29) of the machine housing (12), and/or **in that** the drive section (13) has a gripping region (31) for manually gripping, in particular encompassing, by an operator.

12. Hand-operated power tool according to any of the preceding claims, **characterised in that** the or a covering device (70) at least partially covering the extraction region (30) and/or the extraction connection (15) have/has a cut indicator (83), in particular an indicating projection, pointing in the direction of the centre cut (T) to be produced.

13. Hand-operated power tool according to any of the preceding claims, **characterised in that** the guide body (55) is or can be releasably attached to the machine housing (12).

14. Hand-operated power tool according to any of the preceding claims, **characterised in that** the guide body (55) has a through-opening for the cutting tool (40), and/or **in that** the extraction region (30) is provided between the guide body (55) and the machine housing (12), and/or **in that** a covering body (58) is located at the guide body (55), which covering body (58) at least partially bounds a flow passage (SK) when the guide body (55) is mounted at the machine housing (12), the flow passage (SK) being in flow connection with the extraction port (15), wherein it is advantageously provided that the covering body (58) projects in the direction of the machine housing (12) in front of a top side of the guide body (55) facing the machine housing (12).

15. Hand-operated power tool according to any of the preceding claims, **characterised in that** the extraction port (15) is located at an extraction hood (86), and/or **in that** the extraction hood (86) is located in front of the tool holder (19) in the working direction (AR) and/or can be releasably attached to the machine housing (12).

## Revendications

1. Machine-outil manuelle (10) portative pour fabriquer une coupe de séparation (T) dans une pièce (W) le long d'une direction de travail (AR) à l'aide d'un outil de découpe (40), qui entaille la pièce (W) lors d'un guidage de la machine-outil manuelle (10) portative le long la pièce (W), dans laquelle la machine-outil manuelle (10) présente un entraînement (16) avec un moteur d'entraînement (16A) et un logement d'outil (19) pouvant être entraîné en va-et-vient par l'entraînement (16) de manière oscillante par rapport à un axe d'entraînement (AL) pour loger l'outil de découpe (40), dans laquelle le moteur d'entraînement (16A) est logé dans un carter de machine (12) de la machine-outil manuelle (10), dans laquelle le logement d'outil (19) est disposé sur un côté de fond (29) du carter de machine (12), depuis lequel l'outil de découpe (40) fait saillie dans une position d'utilisation disposée sur le logement d'outil (19) et un contour de découpe (51) de l'outil de découpe (40) est orienté vers l'avant dans la direction de travail (AR), et dans laquelle la machine-outil manuelle (10) présente un raccord d'évacuation par aspiration (15) pour raccorder un système d'évacuation par aspiration (120), en particulier un appareil d'aspiration (110), pour évacuer par aspiration des particules se formant lors d'un usinage de la pièce (W) à l'aide de l'outil de découpe (40), dans laquelle le raccord d'évacuation par aspiration (15) est en communication fluidique avec une zone d'évacuation par aspiration (30) de la machine-outil manuelle (10), sur ou dans laquelle le logement d'outil (19) est disposé, dans laquelle le raccord d'évacuation par aspiration (15) est disposé sur une section d'entraînement avant (13) dans la direction de travail (AR) du carter de machine (12), dans laquelle elle présente un corps de guidage (55) en particulier pouvant être fixé, en particulier une plaque de guidage, dans laquelle le corps de guidage (55) présente une surface de guidage, opposée au carter de machine (12), en particulier une surface plane pour le guidage sur un support (U), et dans laquelle le raccord d'évacuation par aspiration (15) et/ou un système de recouvrement (70) recouvrant au moins en partie la zone d'évacuation par aspiration (30) peuvent être ajustés entre une position de recouvrement (AS) ajustée davantage à proximité du logement d'outil (19) et au moins une position de dégagement (FS) davantage éloignée du logement d'outil (19) par rapport à la position de recouvrement (AS) à l'aide d'un système de support (77), dans laquelle le raccord d'évacuation par aspiration (15) ou le système de recouvrement (70) restent sur le carter de machine (12) lors de l'ajustement entre la position de recouvrement (AS) et l'au moins une position de dégagement (FS), **caractérisée en ce que** le système de support (77) est disposé sur le carter de machine (12) et supporte le raccord d'évacuation par aspiration (15) ou le système de recouvrement (70) entre la position de recouvrement (AS) et la position de dégagement (FS) par rapport au corps de guidage (55).

2. Machine-outil manuelle (10) selon la revendication 1, **caractérisée en ce que** le raccord d'évacuation par aspiration (15) est disposé sur le carter de machine (12) devant le logement d'outil (19) dans la direction de travail (AR).

3. Machine-outil manuelle selon la revendication 1 ou 2, **caractérisée en ce que** le raccord d'évacuation par aspiration (15) est disposé à l'intérieur d'une plage angulaire du carter de machine (12), qui s'étend depuis le côté de fond (29) du carter de machine (12) en direction de l'axe d'entraînement (AL) sur 120° au maximum, en particulier sur 90° au maximum et/ou s'étend jusqu'à l'axe d'entraînement (AL).

4. Machine-outil manuelle selon l'une quelconque des revendications précédentes, **caractérisée en ce qu'**un axe longitudinal d'un canal d'écoulement (SK) s'étendant à travers le raccord d'évacuation par aspiration (15) s'étend selon un angle d'au moins 30°, de préférence d'au moins 40° ou d'au moins 50° ou d'au moins 60°, par rapport à un axe d'extension principal (32) du côté de fond (29) du carter de machine (12) et/ou s'étend dans une plage angulaire s'étendant de manière à s'éloigner de l'axe d'entraînement (AL), en particulier en direction de la direction de travail (AR), selon un angle de 60° au maximum, en particulier de 45° au maximum.

5. Machine-outil manuelle selon l'une quelconque des revendications précédentes, **caractérisée en ce qu'**un axe longitudinal d'un canal d'écoulement (SK) s'étendant à travers le raccord d'évacuation par aspiration (15) présente au moins une composante directionnelle dans la direction de travail (AR).

6. Machine-outil manuelle selon l'une quelconque des revendications précédentes, **caractérisée en ce que** le système de support (77) comprend un palier coulissant et/ou un palier pivotant ou en est formé, et/ou que le système de support (77) présente au moins un contour de maintien, en particulier une partie faisant saillie de guidage (76) et/ou un logement de guidage (28), pour le maintien amovible sur le carter de machine (12).

7. Machine-outil manuelle selon l'une quelconque des revendications précédentes, **caractérisée en ce que** le système de recouvrement (70) dissimule un canal d'écoulement entre la zone d'évacuation par aspiration (30) et le raccord d'évacuation par aspiration (15) dans la position de recouvrement (AS) et dans l'au moins une position de dégagement (FS), et/ou qu'une zone d'extrémité libre (87) du système de recouvrement (70) fait face dans la position de recouvrement (AS) à un corps de guidage (55) fixé sur le carter de machine (12), en particulier à une plaque de guidage, et/ou que le système de recouvrement (70), en particulier sa zone d'extrémité libre (87), recouvre à l'avant au moins dans la direction de travail (AR) dans la position de recouvrement (AS) l'outil de découpe (40).

8. Machine-outil manuelle selon l'une quelconque des revendications précédentes, **caractérisée en ce qu'**elle présente un système de blocage (80), en particulier un système d'enclenchement et/ou un système de serrage, pour bloquer le ou un système de recouvrement (70) recouvrant au moins en partie la zone d'évacuation par aspiration (30) et/ou du raccord d'évacuation par aspiration (15) dans au moins une position relative par rapport au carter de machine (12), dans laquelle il est prévu avantageusement que le système de blocage (80) est disposé sur le système de support (77), en particulier présente un contour d'enclenchement sur un guidage linéaire ou un guidage par pivotement du système de support (77).

9. Machine-outil manuelle selon l'une quelconque des revendications précédentes, **caractérisée en ce que** le raccord d'évacuation par aspiration (15) est disposé de manière stationnaire sur le système de recouvrement (70) ou forme une partie constitutive du système de recouvrement (70).

10. Machine-outil manuelle selon l'une quelconque des revendications précédentes, **caractérisée en ce qu'**elle présente une console (78) pour le maintien amovible de la zone d'évacuation par aspiration (30) recouvrant au moins en partie le ou un système de recouvrement (70) et/ou du raccord d'évacuation par aspiration (15) sur le carter de machine (12) de sorte que le système de recouvrement (70) ou le raccord d'évacuation par aspiration (15) peut être retiré du carter de machine (12), dans laquelle il est prévu avantageusement que la console (78) est formée au moins en partie par le système de support (77) et/ou présente une attache de maintien (75) pour être attachée sur le carter de machine (12), dans laquelle l'attache de maintien (75) présente avantageusement deux branches d'attache (74), qui peuvent être ajustées de manière à s'éloigner l'une de l'autre depuis une position de maintien, dans laquelle l'attache de maintien (75) est attachée au carter de machine (12), dans une position de dégagement (FS) dans un sens dans lequel l'attache de maintien (75) peut être retirée du carter de machine (12).

11. Machine-outil manuelle selon l'une quelconque des revendications précédentes, **caractérisée en ce qu'**une section de préhension (12A) du carter de machine (12) dépasse de la section d'entraînement (13) dans le sens opposé à la direction de travail (AR) vers l'arrière, dans laquelle la section de préhension (12A) présente une zone de préhension pour la saisie manuelle, en particulier pour être saisie en périphérie, par un utilisateur, et/ou qu'outre le raccord d'évacuation par aspiration (15), à l'opposé du côté de fond (29) du carter de machine (12), une poignée de transport formée en particulier par le carter de machine (12) fait saillie du raccord d'évacuation par aspiration (15), et/ou que la section d'entraînement (13) présente une zone de préhension (31) pour la saisie manuelle, en particulier la saisie en périphérie, par un utilisateur.

12. Machine-outil manuelle selon l'une quelconque des revendications précédentes, **caractérisée en ce que** le ou un système de recouvrement (70) recouvrant au moins en partie la zone d'évacuation par aspiration (30) et/ou le raccord d'évacuation par aspiration (15) présentent un indicateur de découpe (83) montrant en direction de la coupe de séparation (T) à fabriquer, en particulier une partie d'affichage faisant saillie.

13. Machine-outil manuelle selon l'une quelconque des revendications précédentes, **caractérisée en ce que** le corps de guidage (55) est fixé ou peut être fixé de manière amovible sur le carter de machine (12).

14. Machine-outil manuelle selon l'une quelconque des revendications précédentes, **caractérisée en ce que** le corps de guidage (55) présente une ouverture de passage pour l'outil de découpe (40), et/ou que la zone d'évacuation par aspiration (30) est prévue entre le corps de guidage (55) et le carter de machine (12), et/ou qu'est disposé sur le corps de guidage (55) un corps de recouvrement (58), qui délimite au moins en partie un canal d'écoulement (SK) dans l'état monté sur le carter de montage (12) du corps de guidage (55), dans laquelle le canal d'écoulement (SK) est en communication fluidique avec le raccord d'évacuation par aspiration (15), dans laquelle il est prévu avantageusement que le corps de recouvrement (58) fait saillie devant un côté supérieur, tourné vers le carter de machine (12), du corps de guidage (55) en direction du carter de machine (12).

15. Machine-outil manuelle selon l'une quelconque des revendications précédentes, **caractérisée en ce que** le raccord d'évacuation par aspiration (15) est disposé sur un capot d'évacuation par aspiration (86), et/ou que le capot d'évacuation par aspiration (86) est disposé devant le logement d'outil (19) dans la direction de travail (AR) et/ou peut être disposé de manière amovible sur le carter de machine (12).
